# EUROPÄISCHE PATENTSCHRIFT

(11) **EP 1 236 235 B1**
(45) Veröffentlichungstag und Bekanntmachung des Hinweises auf die Patenterteilung: **18.10.2006**
(21) Anmeldenummer: 00983197.5
(22) Anmeldetag: 30.11.2000
(51) Int. Cl.: H01M 8/02

(54) **STROM- UND GASVERTEILERSTRUKTUR FÜR ELEKTROCHEMISCHE ZELLE**
ELECTROCHEMICAL CELL
CELLULE ELECTROCHIMIQUE

(30) Priorität: 03.12.1999 DE 19958405
(43) Veröffentlichungstag der Anmeldung: 04.09.2002
(73) Patentinhaber: Fraunhofer-Gesellschaft zur Förderung der angewandten Forschung e.V., 80686 München (DE)
(72) Erfinder: LEDJEFF-HEY, Konstantin DI, verstorben (DE); HEINZEL, Angelika, 79115 Freiburg (DE); MATEJCEK, Lothar, 55278 Mommenheim (DE)
(74) Vertreter: Pfenning, Meinig & Partner GbR
(86) Internationale Anmeldenummer: PCT/EP2000/012052
(87) Internationale Veröffentlichungsnummer: WO 2001/041231

(56) Entgegenhaltungen:
- WO-A-00/26981
- WO-A-00/41260
- WO-A-01/41239
- US-A- 5 108 849
- PATENT ABSTRACTS OF JAPAN vol. 1997, no. 05, 30. Mai 1997 (1997-05-30) -& JP 09 007615 A (TANAKA KIKINZOKU KOGYO KK), 10. Januar 1997 (1997-01-10)

## Beschreibung

Die Erfindung betrifft eine elektrochemische Zelle, insbesondere eine Brennstoffzelle oder einen Elektrolyseur.

Elektrolyseure sind Aggregate, in denen Wasser mit Hilfe von elektrischer Energie in seine Bestandteile Wasserstoff und Sauerstoff zerlegt wird. Damit wird die elektrische Energie in Form von chemisch gebundener Energie gespeichert. Brennstoffzellen sind Agggregate zur Energieumwandlung, die diese chemisch gebundene Energie über eine katalytische Reaktion wieder in elektrische Energie und Wärme umsetzen.

Die Erfindung wird im folgenden am Beispiel einer Brennstoffzelle erläutert.

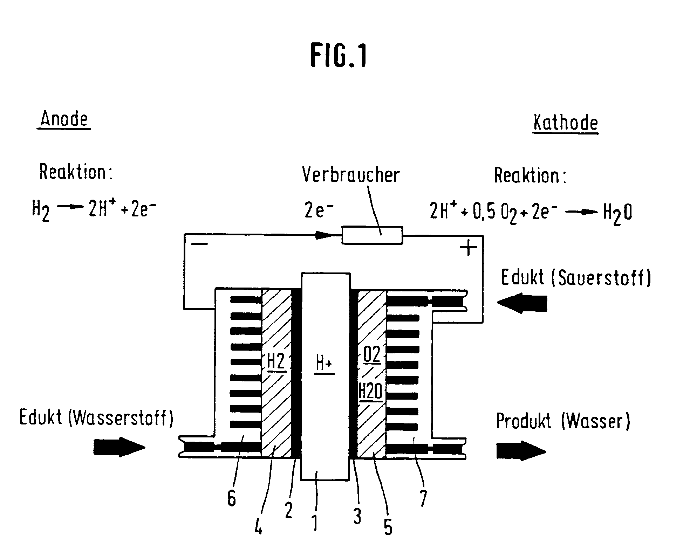

Prinzipiell besteht eine Membran-Brennstoffzelle, wie sie in Fig. 1 für den Fall einer Einzelzelle beispielhaft dargestellt ist, aus einer Membran 1, zwei Elektroden (Anode 2 und Kathode 3), zwei Stromkollektoren 4,5, zwei Strom- und Gasverteilerstrukturen 6,7 und einem Gehäuse, das die Anordnung zusammenhält und gasdicht gegen die Umgebung abschließt. Wesentliches Element der Brennstoffzelle ist die ionenleitende Membran 1, die elektrochemisch die Aufgabe des Elektrolyten übernimmt. In direktem Kontakt zur Membran stehen die beiden Elektroden 2,3, an denen die beiden Halbreaktionen

H₂ → 2 H⁺ + 2 e

und

2H⁺ + 0,50₂ + 2e → H₂O

stattfinden. An der Anode 2 wird Wasserstoff in Protonen (H⁺-Ionen) und Elektronen gespalten. Während die Protonen direkt in den Elektrolyt übergehen und zur Kathode wandern, werden die Elektronen über der gesamten Anodenfläche abgeleitet. Auf der Kathodenseite werden die Elektronen wieder flächig verteilt, um an der zweiten Halbreaktion teilzunehmen. Die Verteilung der Elektronen wird vom Stromkollektor 5 und der Strom- und Gasverteilerstruktur 7 übernommen.
Der Stromkollektor 5 besteht beispielsweise aus einem feinen Kohlefaservlies, wobei die Kohlefasern die Elektronen leiten und durch die Poren zwischen den Fasern der Stofftransport von Edukten und Produkten stattfindet.

Die Strom- und Gasverteilerstruktur 7 ist aus gut leitfähigem Material (Graphit oder Metall) gefertigt und weist eine makroskopische Kanalstruktur (Strukturgrößen im Millimeterbereich) auf, die den Zweck hat, Edukte zu- und Produkte abzuführen.

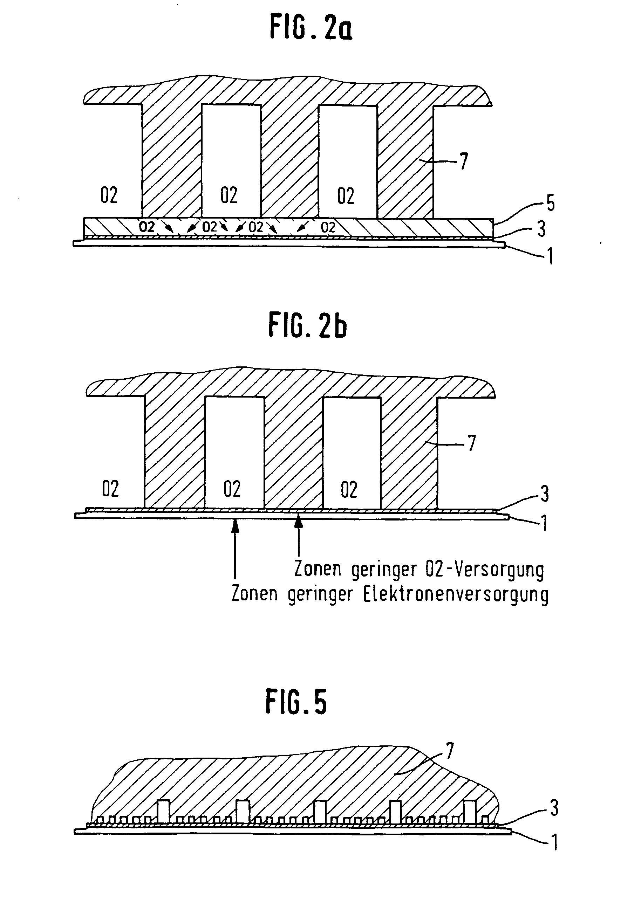

Das Kohlerfaservlies ist für die beschriebene Anwendung deshalb besonders zweckmäßig, da es chemisch und mechanisch relativ stabil ist, eine gute Leitfähigkeit aufweist und durch seine feine Faserstruktur an vielen Stellen die Elektrode berührt und so Elektronentransport und Gastransport in unmittelbarer Nähe zueinander zuläßt. Die chemische Stabilität ist Grundvoraussetzung, da die Elektrode sehr sensibel auf Verunreinigungen reagiert. Die mechanische Stabilität bietet der Membran einen gewissen Schutz vor der relativ groben Struktur der Strom- und Gasverteilerstruktur im zusammengebauten (aufeinandergepressten) Zustand. Zudem erlaubt das Kohlefaservlies durch seine Porosität einen gewissen Stofftransport auch zu den Stellen der Elektrode, die durch die planaren Kontaktstellen der Strom- und Gasverteilerstruktur abgedeckt sind. Dies ist aus der Fig. 2a zu erkennen, die ein Detail des Aufbaus nach Fig. 1 zeigt.

Wie man aus der Fig. 1 entnehmen kann, ist bei den bekannten Ausführungen auch zwischen Anode und anodenseitiger Strom- und Gasverteilerstruktur ein Stromkollektor 4 aus einem Ihohlefaservlies vorhanden, das im wesentlichen den selben Zwecken dient wie das auf der Kathodenseite angeordnete Kohlefaservlies.

Für den Stofftransport der Edukte und Produkte ist das Kohlefaservlies eine Barriere, besonders wenn die Edukte nicht in reiner Form zugeführt werden. Das ist beispielsweise der Fall, wenn an der Kathode statt reinem Sauerstoff Luft, oder wenn an der Anode statt reinem Wasserstoff Reformat eingesetzt wird.

Aus des US 5,108, 849 ist eine elektrochemische Zelle bekannt die Gasverteilerstrukturen mit einer Kanalstruktur aufweist.

Der Erfindung liegt deshalb die Aufgabe zugrunde, eine elektrochemische Zelle, insbesondere eine Membran-Brennstoffzelle, zu schaffen, die eine gegenüber dem Stand der Technik verbesserte Diffusion der Edukte und Produkte zuläßt und einen guten elektrischen Kontakt zwischen Strom- und Gasverteilerstruktur und Elektrode ermöglicht. Die Zelle sollte einen möglichst geringen Innenwiderstand aufweisen.

Diese Aufgabe wird mit dem Gegenstand des Patentanspruch 1 gelöst. Vorteilhafte Ausführungen der Erfindung sind Gegenstand weiterer Ansprüche.

Erfindungsgemäß wird auf das Kohlefaservlies zwischen Elektrode und Strom- und Gasverteilerstruktur verzichtet. Dadurch wird eine gegenüber dem Stand der Technik verbesserte Diffusion der Edukte und/oder Produkte erreicht. Ein guter elektrischer Kontakt wird durch den direkten Kontakt zwischen Strom- und Gasverteiler und Elektrode in Verbindung mit eine speziellen Struktur der Strom- und Gasverteilerstruktur sichergestellt. Diese weist eine mikroskopische Kanalstruktur auf, wobei mindestens eine Strukturgröße Kanalbreite, Kanalabstand, Kanaltiefe) kleiner als 100µm ist.

Durch den Wegfall des Kohlefaservlieses wird der Innenwiderstand der Zellen verringert.

Ein weiterer Vorteil ist der einfachere Zellaufbau mit weniger Einzelteilen. Eine zusätzliche Platzersparnis wird dadurch erreicht, dass durch eine geringere Kanaltiefe die Strom- und Gasverteilerstruktur wesentlich dünner gebaut werden kann. Durch die Platzersparnis lassen sich Zellstapel somit kompakter aufbauen.

Im Zellstapel, der aus mehreren Einzelzellen besteht, befinden sich zwischen den einzelnen Membran-Elektroden-Einheiten die bipolaren Platten, die auf der einen Seite die Strom- und Gasverteilerstruktur für die Kathode, auf der anderen Seite die Strom- und Gasverteilerstruktur für die Anode der benachbarten Membran-Elektroden-Einheit aufweisen. Diese sogenannten bipolaren Platten können wegen der geringen Tiefe der erfindungsgemäßen mikroskopisch feinen Struktur als Folien ausgeführt werden.

Die Zelltemperierung kann durch Kühlkanäle in den Strom- und Gasverteilern erfolgen und hat zum Ziel, die an den Elektroden und in der Membran entstehende Wärme abzuleiten und damit eine unzulässige Erwärmung der Membran zu verhindern. Für den Wärmetransport sind die Kohlefaservliese Isolierschichten und deren Wegfall gemäß der Erfindung sorgt für eine bessere Temperierbarkeit der Membran.

Die erfindungsgemäße elektrochemische Zelle kann für alle Gebiete der Energieumwandlung eingesetzt werden, bei denen das Problem besteht, eine flächige Elektrodenstuktur gleichzeitig flächig mit fluiden Edukten zu versorgen und fluide Produkte abzuführen und darüber hinaus den Transport von Ladungsträgern zur Elektrode hin bzw. von der Elektrode weg zu ermöglichen. Dazu zählen insbesondere Brennstoffzellen und Elektrolyseure.

Die Erfindung wird anhand von Ausführungsbeispielen unter Bezugnahme auf Zeichnungen näher erläutert. Es zeigen:
- Fig. 1: den Aufbau einer Brennstoffzelle gemäß dem Stand der Technik, wie in der Beschreibungseinleitung beschrieben;
- Fig. 2: zwei Ausführungen einer Brennstoffzelle, wobei Fig 2a eine Einzelheit des Aufbaus nach Fig. 1 darstellt;
- Fig. 3: zwei Ausführungen der erfindungsgemäßen Strom- und Gasverteilerstruktur in zwei verschiedenen Ansichten;
- Fig. 4: Details zweier Ausführungen der erfindungsgemäßen Strom- und Gasverteilerstruktur;
- Fig. 5: eine besonders vorteilhafte Ausführung der erfindungsgemäßen Strom- und Gasverteilerstruktur;
- Fig. 6: eine Ausführung zweier erfindungsgemäßer Strom- und Gasverteilerstrukturen auf den beiden Flachseiten einer Bipolarplatte;
- Fig. 7: eine weitere Ausführung zweier erfindungsgemäßer Strom- und Gasverteilerstrukturen auf den Flachseiten einer Bipolarplatte.

Fig. 2a zeigt eine Einzelheit der bekannten Brennstoffzelle nach Fig. 1. Man erkennt die Elektrolytmembran 1, auf deren einen Flachseite die Kathode 3 und benachbart zu dieser der kathodenseitige Stromkollektor 5 aus einem Kohlefaservlies angeordnet ist. Die Zufuhr der Edukte und Abfuhr der Produkte erfolgt mittels der kathodenseitigen Strom- und Gasverteilerstruktur 7, die eine makroskopische Kanalstruktur mit Strukturgrößen im Millimeterbereich aufweist. Aufgrund der Porosität des Kohlefaservlieses wird ein Stofftransport auch zu den Stellen der Elektrode ermöglicht, die durch die planaren Kontaktstellen der Strom- und Gasverteilerstruktur abgedeckt sind.

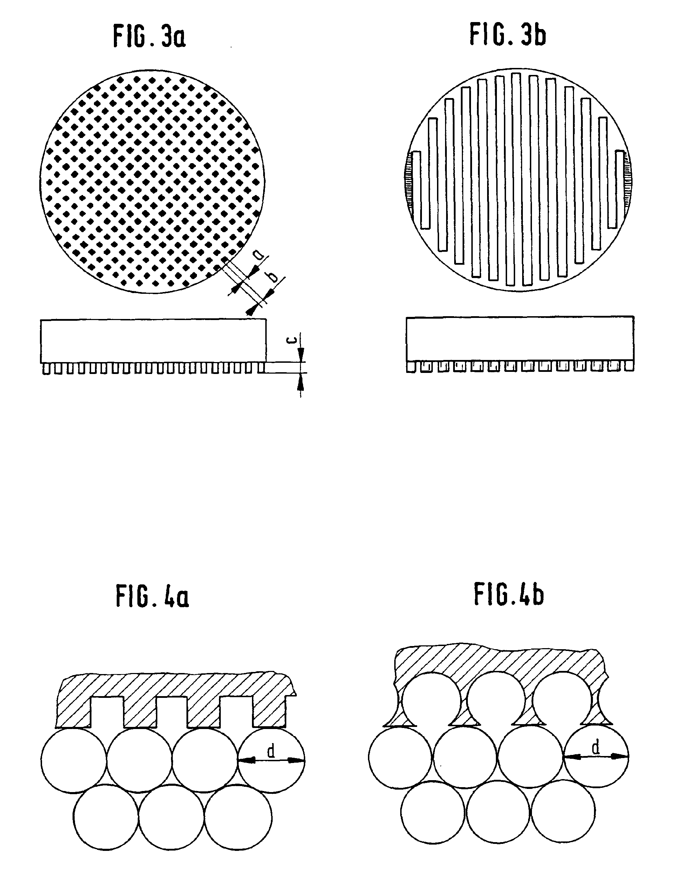

Läßt man, wie in Fig. 2b als Gedankenexperiment dargestellt, bei einem derartigen Aufbau das Kohlefaservlies weg, werden relativ große Bereiche der Membran 1 durch die Kontaktstellen mit der Strom- und Gasverteilerstruktur 7 abgedeckt und damit inaktiv. Durch die erfindungsgemäße mikroskopische Strom- und Gasverteilerstruktur, wie sie beispielhaft in den folgenden Zeichnungen dargestellt ist, kann sichergestellt werden, dass trotz des Wegfalls des Kohlenfaservlieses eine ausreichende Kontaktfläche vorhanden ist. In den Figuren 2b und 3 ist die erfindungsgemässe Querschnittsveränderung nicht dargestellt.

Fig. 3 zeigt zwei Ausführungen der erfindungsgemäßen Strom- und Gasverteilerstrukturen. Die zur Elektronenleitung notwendigen Kontaktstellen (die Erhebungen der Strom- und Gasverteilerstruktur) können zum Beispiel quadratische Füßchen, wie in der Fig. 3a dargestellt, oder Stege, wie in Fig. 3b dargestellt, aufweisen. Die äußere Form der gezeigten Strukturen ist an sich aus dem Stand der Technik bekannt. Der Unterschied der Erfindung zum Stand der Technik liegt in der Dimension der Strukturgrößen. So beträgt die Kantenlänge a der quadratischen Füßchen (der Abstand zwischen zwei Kanälen)gemäß dem Stand der Technik typischerweise ca. 1mm. Die zwischen den Füßchen liegenden Kanäle, sind ebenfalls ca. 1mm breit, d.h. b=lmm. Die Höhe der Erhebungen (Füßchen oder Stege) beträgt z.B. c=3mm. Demgegenüber weist die erfindungsgemäße Strom- und Gasverteilerstruktur eine wesentlich feinere Struktur auf (z.B. Kantenlänge a der quadratischen Füßchen ca. 0,1mm, Kanalbreite b ca. 0,1mm). Diese feinere Struktur ist bezüglich Diffusion und elektrischem Kontakt leistungsfähiger als ein Kohlefaservlies. Sie lässt - ebenso wie das Kohlefaservlies - Gasbeaufschlagung und Elektronenleitung in unmittelbarer Nähe zueinander zu.

Die erfindungsgemäße Strom- und Gasverteilerstruktur kann somit die Funktion des Stromkollektors mit übernehmen, ohne dass die beschriebenen Nachteile des Kohlefaservlieses vorhanden sind.

Die Wahl einer bestimmten Strom- und Gasverteilerstruktur kann abhängig von der Art des Gases (Inertgasballast) und der Funktion (Anode/Kathode) gewählt werden. Selbstverständlich sind auch Kombinationen der in Fig. 3a,3b gezeigten Strukturen, aber auch beliebige andere Formen einsetzbar.

Die Obergrenze für die Dimension der Kontaktstellen ist die herkömmliche Makrostruktur im Millimeterbereich. Die Untergrenze richtet sich nach der Größe der Katalysatorpartikel. Für Katalysatorpartikel mit einem Teilchendurchmesser nicht kleiner als 1µm ist beispielsweise eine Struktur mit einer Kanalbreite von 0,5µm und einem Abstand zwischen benachbarten Kanälen von 0,5µm gut geeignet (dieser Abstand wird immer entlang der äußeren Kante der Kontaktstellen gemessen, so dass der auf diese Weise definierte Abstand zwischen zwei Kanälen immer der Kantenlänge der Kontaktstellen entspricht). Diese Struktur ist in Fig. 4a dargestellt. Der Durchmesser d der Katalysatorpartikel beträgt 1µm. Das Verhältnis von Kantenlänge zu Kanalbreite kann in bestimmten Grenzen variiert werden, um eine optimale Einstellung zu erreichen. Die Tiefe der Kanäle bewegt sich herstellungsbedingt in der Regel in der Größenordnung der Kanalbreite.

Je größer der Kanalquerschnitt ist, desto geringer ist der Druckverlust, den die Strömung durch die Kanäle verursacht. Besonders vorteilhaft im Hinblick auf den Druckverlust sind Hinterschneidungen, die beispielsweise ätztechnisch erreicht werden können. Eine entsprechende Struktur zeigt Fig. 4b. Bei dieser Form wird ein größerer freier Kanalquerschnitt ohne Reduzierung der Kontaktfläche erreicht.

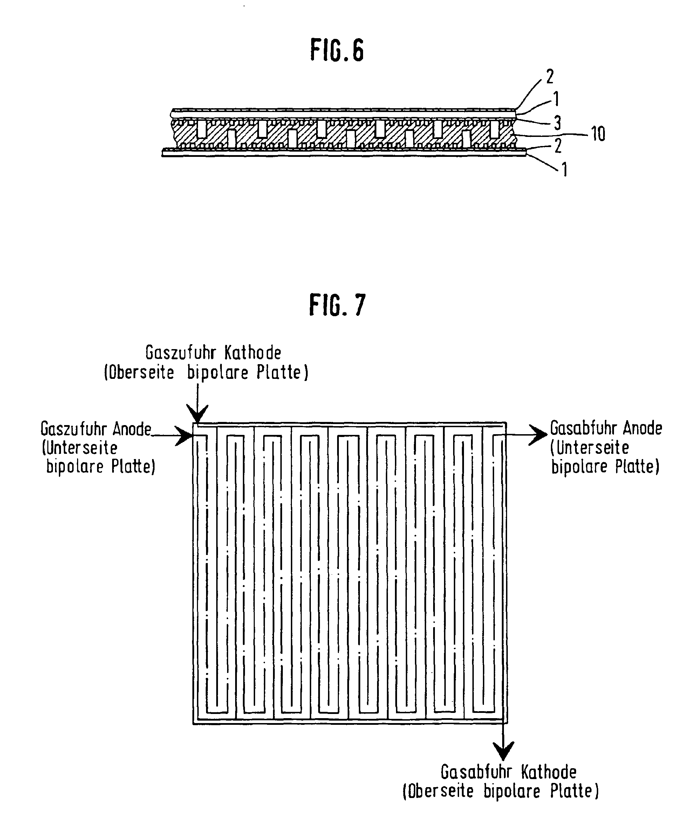

Um den Druckverlust gering zu halten, kann der feinen Kanalstruktur eine etwas gröbere überlagert werden. Man hat dann zwei Gruppen von Kanälen, die sich durch unterschiedliche Querschnittsflächen unterscheiden. In der Fig. 5 ist eine derartige Gasverteilerstruktur 7 beispielhaft dargestellt. Sie weist eine erste Gruppe von Kanälen mit geringem Querschnitt, sowie eine zweite Gruppe von Kanälen mit größerem Kanalquerschnitt auf. Das Verhältnis der Kanalbreiten beträgt in dieser Ausführung ca. 1 : 3. Der Abstand benachbarter Kanäle ist hier zwischen allen benachbarten Kanälen konstant gewählt. Vergleicht man die größeren Kanälen nach Fig. 5 mit der bekannten Struktur nach Fig. 2 (die beiden Zeichnungen sind im selben Maßstab dargestellt) so erkennt man, dass auch diese größeren Kanäle wesentlich geringere Abmessungen aufweisen als die Kanäle der bekannten Struktur.

In Zellstapeln, bei denen mehrere Einzelzellen über oder nebeneinander gestapelt sind, sind üblicherweise die anodenseitige Strom- und Gasverteilerstruktur einer Zelle sowie die kathodenseitige Strom- und Gasverteilerstruktur der benachbarten Zelle auf unterschiedlichen Flachseiten derselben Platte ("bipolare Platte") vorhanden. Derartige bipolare Platten können bei Strom- und Gasverteilerstrukturen, die zwei unterschiedliche Kanalquerschnitte aufweisen, sehr dünn ausgebildet werden, wenn die Kanäle aus der Gruppe mit größerer Querschnittsfläche der einen Strom- und Gasverteilerstruktur zur Deckung kommen mit Kanälen aus der Gruppe mit kleinerer Querschnittsfläche der anderen Strom- und Gasverteilerstruktur. Eine solcherart ausgebildete bipolare Platte 10 ist in Fig. 6 dargestellt. Man erkennt, dass die größeren Kanäle jeder Seite wie bei einem Reißverschluss ineinandergreifen. Die bipolare Platte kann in diesem Fall als dünne Folie ausgebildet sein.

Dies kann z.B. dadurch erreicht werden, dass für die größeren Kanäle auf der Anodenseite der bipolaren Platte eine Serpentinenstruktur und auf der Kathodenseite eine intermittierende Struktur (interdigitated channels) gewählt wird, weil sich die größeren Kanäle beider Seiten dann nicht kreuzen. Ein Beispiel hierfür ist in Fig. 7 wiedergegeben. Weiter möglich sind Strukturen, bei denen die größeren Kanäle einer Seite keine Verbindung zueinander haben (Rippenstruktur), so dass die Kreuzung ebenfalls vermieden wird. Dabei ist noch nicht festgelegt, welche Struktur für welche Elektrode günstiger ist und in welche Richtung die Strukturen durchströmt werden. Dies kann im Hinblick auf eine optimale Arbeitsweise der Zelle noch optimiert werden.

Um den Innenwiderstand der Zelle möglichst gering zu halten, wird die Strom- und Gasverteilerstruktur aus einem möglichst leitfähigem Material, zum Beispiel einem Metall, hergestellt. Die Metalloberfläche wird mit der gewünschten Oberfläche versehen, z.B. durch
- Funkenerodieren
- Lasererosion und Lasersintern
- galvanische Prozesse
- Photolithographie
- Plasmaätzen
- mechanische Prozesse
- Abtragen
- auftragen
- Prägen
oder weitere, dem Fachmann bekannte Verfahren.

Ebenso möglich ist das Herstellen der Strom- und Gasverteilerstrukturen durch Sintern aus Pulvern oder durch Spritzgießen von kunststoffgebundenen Werkstoffen.

Die Strom- und Gasverteiler können auch mit den für die elektrochemische Reaktion erforderlichen Katalysatorpartikeln belegt werden. Ebenso kann der Strom- und Gasverteiler hydrophobiert werden, um dem Fluten der Struktur mit Reaktionswasser entgegenzuwirken.

Die Strom- und Gasverteiler werden direkt auf eine mit zwei Elektroden versehene Membran gepresst oder auf eine andere Art und Weise mit der Einheit aus Membran und Elektroden zu einer Brennstoffzelle zusammengesetzt.

## Patentansprüche

1. Elektrochemische Zelle, insbesondere Brennstoffzelle, aus mindestens einer Einzelzelle, wobei eine Einzelzelle folgende Bestandteile umfasst:
- eine ionenleitende Elektrolytmembran (1), auf deren beiden Flachseiten jeweils eine Elektrode (2, 3) aufgebracht ist,
- eine anodenseitige Strom- und Gasverteilerstruktur (6) sowie eine kathodenseitige Strom- und Gasverteilerstruktur (7), wobei jede der beiden Strom- und Gasverteilerstrukturen (6, 7) ohne Zwischenschaltung eines Stromkollektors (4, 5) o.ä. unmittelbar benachbart zu der jeweiligen Elektrode (2, 3) angeordnet ist, und die Strom- und Gasverteilerstrukturen (6, 7) eine mikroskopische Kanalstruktur mit mindestens einer der Strukturgrössen:
- Kanalbreite (b),
- Abstand (a) zwischen benachbarten Kanälen,
- Kanaltiefe,
kleiner als 100 µm ist,
wobei der Querschnitt der kanäle Hinterschneidung aufweist und/oder dass eine Strom- und Gasverteilerstruktur zumindest zwei Gruppen von Kanäle, mit unterschiedlichen Querschnittsflächen aufweist.

2. Elektrochemische Zelle nach Anspruch 1, **dadurch gekennzeichnet, dass** bei den Strom- und Gasverteilerstrukturen (6, 7) mindestens eine der Strukturgröße
- Kanalbreite (b),
- Abstand (a) zwischen benachbarten Kanälen,
- Kanaltiefe,
kleiner als 10 µm ist.

3. Elektrochemische Zelle nach Anspruch 1 oder 2, **dadurch gekennzeichnet, dass** die anodenseitige Strom- und Gasverteilerstruktur (6) einer Einzelzelle sowie die kathodenseitige Strom- und Gasverteilerstruktur (7) der benachbarten Zelle auf unterschiedlichen Flachseiten desselben Trägers (10) vorhanden sind, wobei die Kanäle aus der Gruppe mit größerer Querschnittsfläche der einen Strom- und Gasverteilerstruktur zur Deckung kommen mit Kanälen aus der Gruppe mit kleinerer Querschnittsfläche der anderen Strom- und Gasverteilerstruktur.

4. Elektrochemische Zelle nach Anspruch 3, **dadurch gekennzeichnet, dass** der Träger (10) eine Folie ist.

## Claims

1. Electrochemical cell, in particular a fuel cell, having at least one individual cell, with an individual cell comprising the following components:
- an ion-conducting electrolyte membrane (1), on each of whose two flat faces an electrode (2, 3) is fitted,
- an anode current and gas distributor structure (6) as well as a cathode current and gas distributor structure (7) with each of the two current and gas distributor structures (6, 7) being arranged immediately adjacent to the respective electrode (2, 3) without the interposition of a current collector (4, 5) or the like and with the current and gas distributor structures (6, 7) having a microscopic channel structure with at least one of the structure sizes:
- channel width (b),
- distance (a) between adjacent channels,
- channel depth,
being less than 100 µm, with the cross section of the channels having undercuts and/or in that a current and gas distributor structure has at least two groups of channels with different cross-sectional areas.

2. Electrochemical cell according to Claim 1, **characterized in that**, in the current and gas distributor structures (6, 7), at least one of the structure sizes
- channel width (b),
- distance (a) between adjacent channels,
- channel depth,
is less than 10 µm.

3. Electrochemical cell according to Claim 1 or 2, **characterized in that** the anode current and gas distributor structure (6) of one individual cell as well as the cathode current and gas distributor structure (7) of the adjacent cell are provided on different flat faces of the same mount (10), with the channels from the group with the larger cross-sectional area of the one current and gas distributor structure covering channels from the group with the smaller cross-sectional area of the other current and gas distributor structure.

4. Electrochemical cell according to Claim 3, **characterized in that** the mount (10) is a film.

## Revendications

1. Cellule électrochimique, en particulier pile à combustible, constituée d'au moins une cellule unique, dans laquelle une cellule unique comprend les composants suivants :
- une membrane électrolytique conductrice d'ions (1) sur les deux faces de laquelle est appliquée respectivement une électrode (2, 3) ;
- une structure de répartition de courant et de gaz (6) du côté de l'anode ainsi qu'une structure de répartition de courant et de gaz (7) du côté de la cathode, où chacune des deux structures de répartition de courant et de gaz (6, 7) est disposée immédiatement à côté de l'électrode (2, 3) respective sans intercalation d'un collecteur de courant (4, 5) ou autre, et où les structures de répartition de courant et de gaz (6, 7) ont une structure de canal microscopique avec au moins une des grandeurs de structure :
- largeur de canal (b),
- intervalle (a) entre canaux voisins,
- profondeur de canal,
inférieure à 100 µm, où la section des canaux présente des contre-dépouilles et/ou une structure de répartition de courant et de gaz présente au moins deux groupes de canaux avec des surfaces de section différentes.

2. Cellule électrochimique selon la revendication 1 **caractérisée en ce que** dans les structures de répartition de courant et de gaz (6,7), au moins une des grandeurs de structure :
- largeur de canal (b),
- intervalle (a) entre canaux voisins,
- profondeur de canal,
est inférieure à 10 µm.

3. Cellule électrochimique selon la revendication 1 ou 2 **caractérisée en ce que** la structure de répartition de courant et de gaz (6) du côté de l'anode d'une cellule ainsi que la structure de répartition de courant et de gaz (7) du côté de la cathode de la cellule voisine sont situées sur des faces différentes du même support (10), pour lesquelles les canaux du groupe à plus grande surface de section de l'une des structures de répartition de courant et de gaz viennent recouvrir les canaux du groupe à plus petite surface de section de l'autre structure de répartition de courant et de gaz.

4. Cellule électrochimique selon la revendication 3 **caractérisée en ce que** le support (10) est une feuille.
